# EUROPÄISCHE PATENTSCHRIFT

(11) **EP 4 182 190 B1**
(45) Veröffentlichungstag und Bekanntmachung des Hinweises auf die Patenterteilung: **16.04.2025**
(21) Anmeldenummer: 21749110.9
(22) Anmeldetag: 12.07.2021
(51) Int. Cl.: B60R 22/34, B60R 22/46, B60R 22/44

(54) **GURTAUFROLLER**
BELT RETRACTOR
ENROULEUR DE CEINTURE DE SÉCURITÉ

(30) Priorität: 16.07.2020 DE 102020208905
(43) Veröffentlichungstag der Anmeldung: 24.05.2023
(73) Patentinhaber: Autoliv Development AB, 447 83 Vårgårda (SE)
(72) Erfinder: SÖHNCHEN, Arndt, 22765 Hamburg (DE); EHLERS, Jens, 25358 Horst (DE); JABUSCH, Ronald, 25336 Elmshorn (DE); GLAESSER, Antto-Christian, 25474 Hasloh (DE); CIRSTEA, Alexandru, 25335 Elmshorn (DE)
(74) Vertreter: Müller Verweyen
(86) Internationale Anmeldenummer: PCT/EP2021/069257
(87) Internationale Veröffentlichungsnummer: WO 2022/013118

(56) Entgegenhaltungen:
- DE-A1- 102015 221 572
- DE-A1- 102018 219 040
- US-A1- 2008 191 083

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung an einer Sitzstruktur oder an einer Fahrzeugstruktur und ist dafür aus einem entsprechend dicken Stahlblech hergestellt, welches zu einem U-förmigen Rahmen gebogen ist.

Ferner werden Gurtaufroller in modernen Sicherheitsgurteinrichtungen mit Elektromotoren versehen, welche die Gurtwelle bei einer Aktivierung zum Beispiel zu einer reversiblen Gurtstraffung in Aufwickelrichtung antreiben. Der Elektromotor ist dabei ebenfalls an dem Rahmen befestigt und seitlich der Gurtwelle mit einer parallel zu der Drehachse der Gurtwelle ausgerichteten Antriebswelle angeordnet. Ferner ist es bekannt, zwischen der Gurtwelle und dem Elektromotor ein Getriebe vorzusehen, durch welches die Drehzahl des Elektromotors in eine vorbestimmte Drehzahl der Gurtwelle übersetzt wird. Durch die Verwendung des Getriebes wird es außerdem ermöglicht, einen möglichst kleinbauenden Elektromotor mit einer hohen Drehzahl zu verwenden. Insgesamt ergibt sich dadurch trotz der durch das Getriebe ermöglichten Verwendung des kleinbauenden Elektromotors ein Gurtaufroller mit einem vergrößerten Bauraumbedarf. Ein solcher Gurtaufroller ist z.B. aus der Druckschrift WO 03/0 99 619 A2 bekannt.

Sofern die Gurtwelle mit unterschiedlichen Drehzahlen und Drehmomenten angetrieben werden soll, müssen weitere Getriebestufen vorgesehen werden, welche den Bauraumbedarf weiter vergrößern. Ein solcher Gurtaufroller ist z.B. aus der Druckschrift DE 199 27 731 C2 bekannt.

Da die an der Sitzstruktur der Fahrzeugsitze oder auch allgemein in sehr kleinen Fahrzeugen zur Verfügung stehenden Bauräume in ihrer Größe sehr begrenzt sind und aus Designgründen nicht beliebig vergrößert werden können, ist die Anordnung eines derartigen Gurtaufrollers am Fahrzeugsitz oder auch in einem kleinen Fahrzeug grundsätzlich problematisch.

Aus der DE 10 2018 219 040 A1 ist ein Gurtaufroller bekannt, bei dem der Bauraumbedarf dadurch weiter reduziert, indem das Getriebe in einem ersten Kraftübertragungsweg als Baugruppe angetrieben wird, und indem eine Kupplung vorgesehen ist, welche durch einen Schaltvorgang das Getriebe aktiviert und einen zweiten Kraftübertragungsweg eröffnet. Dadurch kann ein Getriebe mit einem einzigen Kraftübertragungsweg zur Verwirklichung von zwei verschiedenen Übersetzungen genutzt werden. Dabei wird das Getriebe selbst in dem ersten Kraftübertragungsweg als Baugruppe also als ein Block angetrieben, ohne dass die Getriebeteile in sich eine Relativbewegung zueinander ausführen. Die Kupplung weist hier ein von dem Elektromotor angetriebenes Antriebsrad mit drei dreieckförmigen sich radial nach außen verengenden Öffnungen auf, in welche jeweils eine Kupplungsklinke mit jeweils einem Steuerstift eingreifen. Die Kupplungsklinken sind längsverschieblich, in Radialrichtung geführt und jeweils über eine Feder radial nach außen federbelastet. Zur Schaltung der Kupplung werden die Kupplungsklinken durch bei dem Überschreiten einer bestimmten Drehbeschleunigung des Antriebsrades entgegen der Federkraft radial nach innen gezogen, wodurch die Drehverbindung zwischen den Kupplungsklinken und einem dem Getriebe zugeordneten ersten Teil aufgehoben wird.

Vor diesem Hintergrund liegt der Erfindung die Aufgabe zugrunde, einen verbesserten Gurtaufroller mit einem Elektromotor und einem Getriebe mit einer Kupplung mit einem vereinfachten Aufbau zu schaffen.

Zur Lösung der Aufgabe wird ein Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 vorgeschlagen, dass das Kupplungselement an einem zweiten Teil des Getriebes gelagert ist, und das zweite Teil ein drehfest verbundenes Zahnrad aufweist, mit welchem es sich in einem Verzahnungseingriff mit einem oder mehr Zahnrädern eines Übersetzungsgetriebes befindet, und die Feder durch eine Bogenfeder gebildet ist, welche mit einem ersten Ende mit dem Kupplungselement und mit einem zweiten Ende mit dem zweiten Teil verbunden ist.

Das zweite Teil des Getriebes, an dem das Kupplungselement gelagert ist, bildet damit über das damit drehfest verbundene Zahnrad gleichzeitig den Antrieb, über den die Drehbewegung in das Übersetzungsgetriebe eingeleitet wird. Die Vorteile der Verwendung einer Bogenfeder liegen darin, dass sie kostengünstig ist, dass sie einfach zu montieren ist und außerdem sehr einfach z.B. durch Öffnungen oder Anschlagflächen kraftübertragend mit dem Kupplungselement und dem zweiten Teil verbunden werden kann.

Weiterhin wird vorgeschlagen, dass das Kupplungselement die Drehbewegung des Antriebsrades unterhalb der vorbestimmten Drehzahl und/oder unterhalb des vorbestimmten Drehmomentes auf das erste Teil des Getriebes überträgt. Hierdurch kann die Drehbewegung des Elektromotors bei kleinen Drehmomenten, Drehzahlen und/oder Drehbeschleunigungen in einem ersten Kraftübertragungsweg direkt über das Kupplungselement auf das erste Teil des Getriebes z.B. in einem Übersetzungsverhältnis von 1:1 auf die Gurtwelle übertragen werden, wodurch z.B. eine Aufwickelhilfe des Sicherheitsgurtes in die Parkposition, eine Komfortfunktion zur Verstellung der auf die Gurtwelle wirkenden Rückzugskraft oder Ähnliches verwirklicht werden.

Dabei kann das Kupplungselement bevorzugt einen in das erste Teil des Getriebes eingreifenden Eingriffsabschnitt aufweisen, und das Kupplungselement kann wenigstens zwei zu einer durch den Eingriffsabschnitt verlaufenden Symmetrieachse symmetrisch ausgebildete Kraftübertragungsabschnitte aufweisen, mit welchen das Kupplungselement an dem polygonförmigen Kraftübertragungsprofil des Antriebsrades anliegt. Das Kupplungselement überträgt dabei die Drehbewegung über den Eingriffsabschnitt auf das erste Teil. Die Kraftübertragung von dem Antriebsrad auf das Kupplungselement erfolgt aufgrund der symmetrischen Kraftübertragungsabschnitte.in beide Drehrichtungen mit möglichst identischen Kraftverhältnissen, und das Kupplungselement kann in zwei verschiedenen Ausrichtungen montiert werden.

Weiter wird vorgeschlagen, dass das polygonförmige Kraftübertragungsprofil im Querschnitt ein Dreieckprofil aufweist, und das Kupplungselement das Dreieckprofil an zwei Ecken umfasst. Das Kupplungselement umfasst das Kraftübertragungsprofil an zwei Ecken mit einer formschlüssigen Überlappung und überträgt dadurch die Antriebsdrehbewegung in beide Drehrichtungen. Ferner wird das Kupplungselement dadurch bei einem Überschreiten einer der vorbestimmten Bedingungen formschlüssig mitgenommen und aus der Eingriffsstellung gezogen.

Dabei kann die symmetrische Kraftübertragung mit möglichst identischen Kraftverhältnissen in beide Drehrichtungen bevorzugt dadurch verwirklicht werden, indem das Dreieckprofil die Geometrie eines gleichseitigen Dreiecks aufweist. Ferner kann dadurch die Montage erleichtert werden, da die Montage des Gurtaufrollers dadurch mit drei verschiedenen Stellungen des Antriebsrades möglich ist. Da die Spitzen des Dreieckprofils dadurch eine identische Geometrie aufweisen, ist es insbesondere unerheblich, an welcher der Spitzen das Kupplungselement mit dem oder den Kraftübertragungsabschnitt(en) anliegt.

Weiter wird vorgeschlagen, dass in diesem Fall das zweite Teil eine Anschlagfläche aufweist, an welcher Antriebsrad mit dem Kraftübertragungsprofil durch die Ausführung einer Relativbewegung kraftübertragend zur Anlage gelangt. Die Relativbewegung wird ausgelöst, wenn die vorbestimmte Drehzahl, das vorbestimmte Drehmoment und/oder die vorbestimmte Drehbeschleunigung überschritten wird. Dadurch wird das Kupplungselement aus der Eingriffsstellung herausbewegt, und das Antriebsrad gelangt in eine kraftübertragende Anlage an dem zweiten Teil. Dadurch treibt das Antriebsrad das zweite Teil und über das damit drehfest verbunden Zahnrad auch das Übersetzungsgetriebe bei einer gleichzeitig gelösten Drehverbindung zwischen dem Antriebsrad und dem ersten Teil an.

Dabei kann das zweite Teil bevorzugt eine Führung aufweisen, in welcher das Kupplungselement mit dem Eingriffsabschnitt geführt ist. Die Bewegung des Kupplungselementes wird durch die Federkraft und die Bewegung des Antriebsrades ausgelöst, während die Richtung der Bewegung durch die Führung des Kupplungselementes an dem zweiten Teil definiert ist. Dabei ist die Führung des Kupplungselementes im Bereich des Eingriffsabschnittes von besonderem Vorteil, da das Kupplungselement dadurch bevorzugt möglichst nahe der zu verwirklichenden Verbindung mit dem ersten Teil geführt ist und dort eine Abstützung findet.

Die Erfindung wird im Folgenden anhand bevorzugter Ausführungsformen unter Bezugnahme auf die beigefügten Figuren erläutert. Dabei zeigt
Fig. 1 ein erfindungsgemäßer Gurtaufroller mit zwei Gehäuseschalen montiert und demontiert
Fig. 2 ein Getriebe, ein Elektromotor und eine dazwischen angeordnete Kupplung des Gurtaufrollers in Explosionsdarstellung
Fig. 3 eine Schnittdarstellung mit der Kupplung in einer ersten Stellung, und
Fig. 4 eine Schnittdarstellung mit der Kupplung in einer zweiten Stellung.

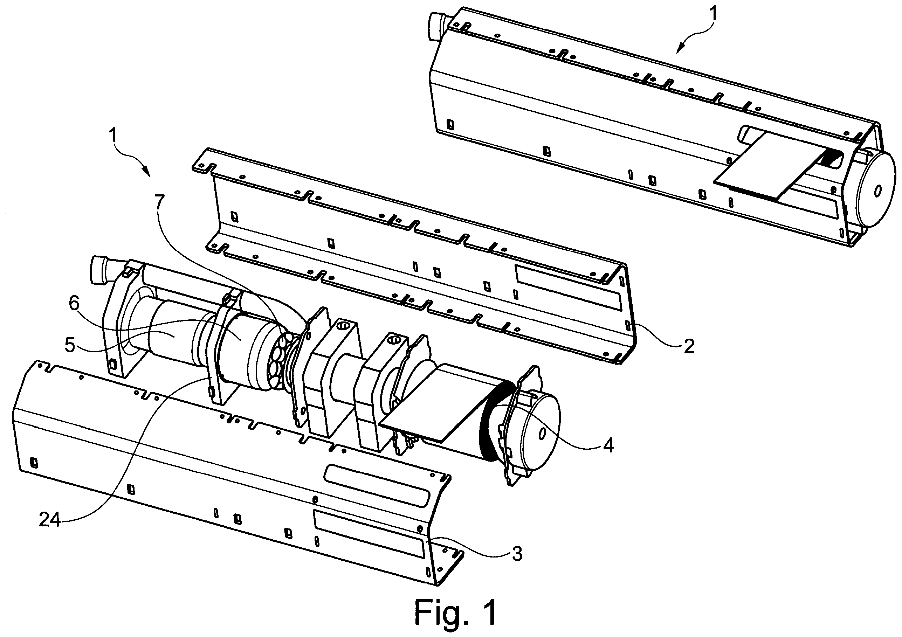

In der Figur 1 ein erfindungsgemäßer Gurtaufroller 1 mit einem durch zwei Gehäuseschalen 2 und 3 zusammengesetzten Gehäuse zu erkennen, welches sowohl der Befestigung des Gurtaufrollers 1 an einem Fahrzeug, bevorzugt in einem schmalen länglichen Bauraum eines Fahrzeugsitzes, als auch zur Lagerung und Befestigung der nachfolgend noch näher beschriebenen Einzelteile des Gurtaufrollers 1 dient. Das Gehäuse kann auch Teil einer übergeordneten Struktur des Fahrzeugsitzes oder des Fahrzeugs, wie z.B. eine Strebe oder ein Holm, sein.

Das Gehäuse ist innenseitig mit mehreren Stegen 24 zur Lagerung des Gurtaufrollers 1 versehen, welche senkrecht zu der Drehachse des Gurtaufrollers ausgerichtet und in Bezug zu der Drehachse formschlüssig und drehfest mit dem Gehäuse verbunden sind. Der Gurtaufroller 1 weist als Grundbauteil eine Gurtwelle 4 auf, auf welcher ein zur Rückhaltung eines Insassen vorgesehener Sicherheitsgurt aufwickelbar ist. Ferner ist ein irreversibler Gurtstraffer 7 zum Antrieb der Gurtwelle 4 in Aufwickelrichtung und damit zum Herausziehen vorhandener Gurtlose in einer Frühphase eines Unfalles vorgesehen. Außerdem ist ein Elektromotor 5 und ein Getriebe 6 vorgesehen. Die Gurtwelle 4, der irreversible Gurtstraffer 7, der Elektromotor 5 und das Getriebe 6 sind koaxial zueinander angeordnet. Ferner sind der Elektromotor 5, das Getriebe 6 und der irreversible Gurtstraffer 7 in den Außenabmaßen senkrecht zu der Drehachse der Gurtwelle so bemessen, dass sie kleiner als der maximale Durchmesser des vollständig aufgewickelten Gurtwickels auf der Gurtwelle 4 sind. Da das Gehäuse hier im Querschnitt eckig ausgebildet ist, bleiben in den Ecken zusätzliche Freiräume, welche z.B. zur Anordnung eines Strafferantriebsrohres des irreversiblen Gurtstraffers 7 oder anderer Anbauteile, wie z.B. Steuereinheiten oder auch elektrischen Leitungen genutzt werden können. Damit sind die maximalen Außenabmaße durch den maximalen Durchmesser des Gurtwickels vorgegeben. Da der maximale Durchmesser wiederum durch die Dicke des Gurtbandes und die maximal aufzuwickelnde Länge des Gurtbandes vorgegeben ist und ohne eine Änderung des Gurtbandes nicht verringert werden kann, weist der Gurtaufroller 1 damit die kleinstmöglichen Abmaße senkrecht zu der Drehachse der Gurtwelle 4 auf und kann damit auch in sehr schmalen und länglichen Freiräumen des Fahrzeugsitzes und der Fahrzeugstruktur angeordnet und befestigt werden.

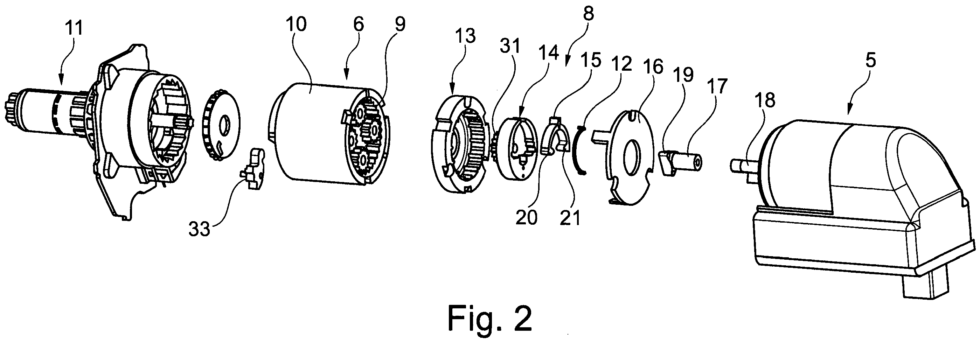

In der Figur 2 ist der Elektromotor 5 mit dem Getriebe 6, einer dazwischen angeordneten Kupplung 8 und einer zusätzlich vorgesehenen optionalen Kraftbegrenzungseinheit 11 gezeigt.

Das Getriebe 6 umfasst als Grundbauteile die Kupplung 8, ein Übersetzungsgetriebe 9, welches hier als Planetengetriebe ausgebildet ist, und ein Getriebegehäuse 10. Das Getriebe 6 wird außen von dem Getriebegehäuse 10 umfasst und weist eine zylindrische Grundform auf. Das Getriebegehäuse 10 selbst ist rohr- oder ringförmig ausgebildet und weist an seiner Innenseite eine Innenverzahnung auf, in der sich die Planetenräder des Planetengetriebes abwälzen.

Der Elektromotor 5 weist eine herausgeführte Antriebswelle 18 auf, auf der ein Antriebsrad 17 drehfest über einen Verzahnungseingriff festgelegt ist. Der Elektromotor 8 treibt das Antriebsrad 17 damit bei einer Aktivierung unmittelbar an.

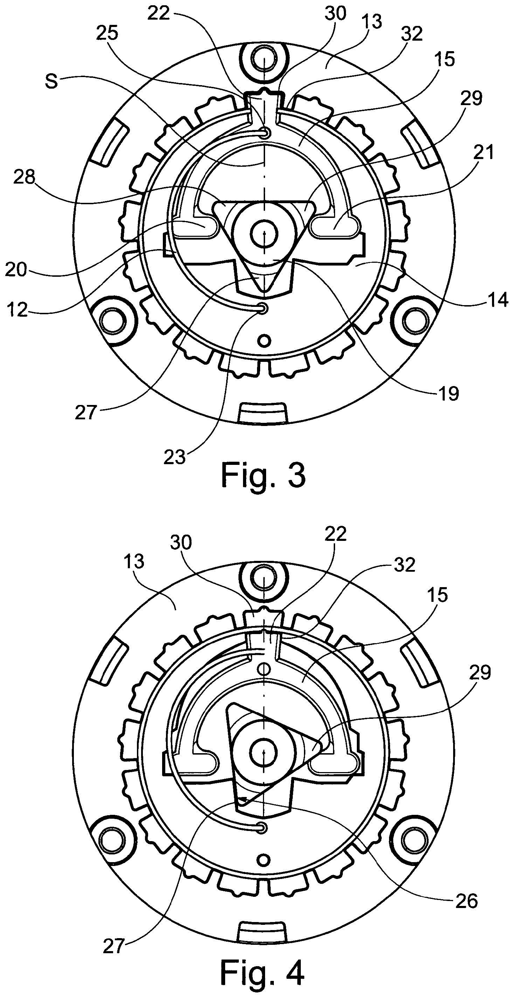

Die Kupplung 8 umfasst in ihrem Grundaufbau ein erstes Teil 13, ein zweites Teil 14, ein Kupplungselement 15 und eine Feder 12. Das erste Teil 13 ist in Form eines Ringes mit einem radial innen angeordneten regelmäßigen Verzahnungsprofil 30 ausgebildet. Ferner weist das erste Teil 13 radial außen mehrere Ausnehmungen auf, welche mit Ausnehmungen an dem Getriebegehäuse 10 fluchten. Das erste Teil 13 ist über eine Abdeckscheibe 16 stirnseitig abgedeckt, welche zusätzlich axial vorstehende Finger aufweist, mit denen es in die radial äußeren Ausnehmungen des ersten Teils 13 und des Getriebegehäuse 10 eingreift und dadurch das erste Teil 13 in Umfangsrichtung drehfest gegenüber dem Getriebegehäuse 10 fixiert. Sofern die Verbindung über einen Presssitz verwirklicht ist, kann dadurch zusätzlich eine axiale Sicherung des ersten Teils 13 gegenüber dem Getriebegehäuse 10 verwirklicht werden. Das erste Teil 13 weist radial innen einen kreisförmigen Freiraum auf, in dem das zweite Teil 14 der Kupplung 8 drehbar angeordnet ist, wie auch in den Figuren 3 und 4 zu erkennen ist. Damit ist nach dem Aufsetzen der Abdeckscheibe 16 auch das zweite Teil 14 axial fixiert. Die Abdeckscheibe 16 weist ferner eine zentrale Öffnung auf, durch die sich das Antriebsrad 17 erstreckt. Das Antriebsrad 17 weist an seinem freien Ende ein polygonförmiges Kraftübertragungsprofil 19 auf, mit dem es in einen radial innen an dem zweiten Teil 14 vorgesehen Freiraum eingreift. Ferner ist in dem Freiraum des zweiten Teils 14 das Kupplungselement 15 so angeordnet, dass es das Kraftübertragungsprofil 19 radial außen umfasst.

Das polygonförmige Kraftübertragungsprofil 19 des Antriebsrades 17 weist die Geometrie eines gleichseitigen Dreiecks mit drei Ecken 27,28 und 29 mit identischen Winkeln und dadurch identisch zueinander ausgerichteten seitlichen Kraftübertragungsflächen auf. Das Kupplungselement 15 weist einen radial vorstehenden Eingriffsabschnitt 22 auf, mit dem es in einer Führung 32 des zweiten Teils 14 radial verschieblich geführt ist. Ferner weist das Kupplungselement 15 zwei zu einer durch die Mitte des Eingriffsabschnittes 22 verlaufenden Symmetrieachse S symmetrisch ausgebildete, bogenförmige Arme auf, welche sich in etwa zu einem Halbkreis ergänzen. An den Enden der Arme ist das Kupplungselement 15 jeweils mit radial einwärts gerichteten Kraftübertragungsabschnitten 20,21 geformt, mit denen es jeweils eine Ecke 28,29 des Kraftübertragungsprofils 19 der Antriebswelle 17 umfasst, wie in der Figur 3 zu erkennen ist. Die Feder 12 ist in Form einer Bogenfeder ausgebildet und mit einem ersten Ende 25 an dem Kupplungselement 15 in einer radial einwärts zu dem Eingriffsabschnitt 22, auf der Symmetrieachse S angeordneten Öffnung eingehängt. Weiter ist die Feder 12 mit einem zweiten Ende 23 in einer Öffnung des zweiten Teils 14 eingehängt, welche so angeordnet ist, dass sie in der unbelasteten Anordnung des Kupplungselementes 15 also im Stillstand des Elektromotors 5 ebenfalls auf der Symmetrieachse S liegt. Die Feder 12 ist in ihrer Federcharakteristik und in der Anordnung der beiden fixierten Enden 25 und 23 so ausgelegt, dass sie das Kupplungselement 15 mit dem Eingriffsabschnitt 22 radial nach außen zu einem Eingriff in das Verzahnungsprofil 30 des ersten Teils 13 drängt. Dadurch wird durch das Kupplungselement 15 im unbelasteten Zustand eine Drehverbindung zwischen dem ersten Teil 13 und dem zweiten Teil 14 geschaffen.

Für den Fall, dass der Elektromotor 5 in der in Figur 3 zu erkennenden Ausgangsstellung des Kupplungselementes 15 mit kleinen Drehmomenten, Drehzahlen und/oder Drehbeschleunigungen betrieben wird, wie dies z.B. zu einem Aufwickeln des Sicherheitsgurtes in die Parkposition oder zu einer Verstellung der auf die Gurtwelle 4 ausgeübten Rückzugskraft (Komfortfunktion) der Fall ist, treibt das Antriebsrad 17 das erste Teil 13 über das Kraftübertragungsprofil 19 und das Kupplungselement 15 an. Da das erste Teil 13 über die Abdeckscheibe 16 drehfest mit dem Getriebegehäuse 10 verbunden ist, wird dabei das gesamte Getriebe 6 als Baugruppe und darüber die Gurtwelle 4 in einem Übersetzungsverhältnis von 1:1 angetrieben. Dabei kann die Gurtwelle 4 über die beiden Kraftübertragungsabschnitte 20,21 in beide Drehrichtungen angetrieben werden, wobei die Kraftübertragung je nach der Drehrichtung nur über einen der Kraftübertragungsabschnitte 20 oder 21 erfolgt. Da sowohl das Kupplungselement 15, als auch das Kraftübertragungsprofil 19 in der Stellung der Figur 3 symmetrisch zu der Symmetrieachse S ausgerichtet sind, ergeben sich identische Kraftverhältnisse in beide Drehrichtungen. Das zweite Teil 14 weist an seiner dem Planetengetriebe zugewandten axialen Stirnseite ein zentrisch angeordnetes Zahnrad 31 auf, welches in die Verzahnungen der Planetenräder des Planetengetriebes eingreift. Da das zweite Teil 14 mit einer identischen Drehzahl wie das erste Teil 13 dreht, wird das gesamte Getriebe 6 auch über das zentrische Zahnrad 31 mitgenommen. Das gesamte Getriebe 6 dreht zusammen mit dem ersten Teil 13 und dem zweiten Teil 14 mit der von der Antriebswelle 17 angetriebenen Drehzahl als Baugruppe, ohne dass die Zahnräder des Getriebes 6 darüberhinaus weitere Relativdrehbewegungen zueinander ausführen.

Das Öffnen der Kupplung 8 erfolgt dadurch, indem die Leistung des Elektromotors 5 z.B. zu einer reversiblen Gurtstraffung soweit erhöht wird, dass eine vorbestimmte Drehzahl, ein vorbestimmtes Drehmoment und/oder eine vorbestimmte Drehbeschleunigung überschritten wird. In diesem Fall dreht das Antriebsrad 17 so schnell, dass das Kupplungselement 15 zurückbleibt und entgegen der Federkraft der Feder 12 in die in der Figur 4 zu erkennende Position gezogen wird. Dabei gelangt das Kupplungselement 15 mit dem Eingriffsabschnitt 22 außer Eingriff des Verzahnungsprofils 30 und die Drehverbindung zwischen dem ersten Teil 13 und dem zweiten Teil 14 wird aufgehoben. Die Kupplung 8 wird damit geöffnet. Gleichzeitig gelangt die Antriebswelle 17 mit einer Seitenfläche des Kraftübertragungsprofils 19 zur Anlage an einer Anschlagfläche 26 des zweiten Teils 14 und treibt dadurch nachfolgend das zweite Teil 14 direkt zu einer Drehbewegung an, während das erste Teil 13 aufgrund der geöffneten Kupplung 8 nicht mehr angetrieben wird.

Die Drehbewegung des zweiten Teils 14 wird in diesem Fall über das zentrische Zahnrad 31 auf die Zahnräder des Planetengetriebes übertragen. Das Getriebegehäuse 10 wird nicht mehr angetrieben und kann zusätzlich über eine Blockiereinrichtung 33 fahrzeugfest blockiert sein, jedenfalls drehen die Zahnräder des Planetengetriebes gegenüber dem Getriebegehäuse 10 und die Drehbewegung der Antriebswelle 17 wird nun in einem Übersetzungsverhältnis von 1:80 in eine langsamere Drehzahl auf die Gurtwelle 4 übersetzt. Aufgrund der Übersetzung der höheren Drehzahl in die kleinere Drehzahl wird gleichzeitig das auf die Gurtwelle 4 ausgeübte Drehmoment und die dadurch auf den Sicherheitsgurt ausgeübte Rückzugskraft erhöht.

Der Elektromotor 5 kann dadurch in einem ersten Kraftübertragungsweg bei geschlossener Kupplung 8 und deaktiviertem Getriebe 6 mit einem Übersetzungsverhältnis von 1:1 und einer Drehzahl 60 bis 180 U/min zum Aufwickeln des Gurtbandes nach dem Abschnallen in die Parkposition betrieben werden, indem das Getriebe 6 als Block gedreht wird. Sofern die vorgeschlagene Drehzahl auch die Drehzahl der Gurtwelle 4 sein soll, kann die Antriebsdrehbewegung dann auch in einem Übersetzungsverhältnis von 1:1 weiter auf die Gurtwelle 4 übertragen werden. Zur reversiblen Gurtstraffung kann die Drehzahl des Elektromotors 5 schlagartig auf 5000 bis 15000 U/min erhöht werden, welche durch das Getriebe 6 in dem durch die geöffnete Kupplung 8 eröffneten zweiten Kraftübertragungsweg auf die kleinere Drehzahl von ca. 140 bis 420 U/min des Abtriebszahnrades 23 in dem Übersetzungsverhältnis von 1:80 übersetzt wird. Dabei wird zur Schaltung der Kupplung 8 die deutlich höhere Antriebsdrehzahl von 5000 bis 15000 U/min im Vergleich zu der Antriebsdrehzahl von 60 bis 180 U/min beim Antreiben der Gurtwelle 4 in dem ersten Kraftübertragungsweg genutzt. So kann die Kupplung 8 bzw. das Getriebe 6 mit der integrierten Kupplung 8 so ausgelegt werden, dass sie z.B. erst bei einem Überschreiten einer Antriebsdrehzahl von 1000 U/min öffnet.

Damit erfolgt die Übertragung der Antriebsdrehbewegung von 60 bis 180 U/min in dem ersten Kraftübertragungsweg prozesssicher, und ein unbeabsichtigtes Öffnen der Kupplung 8 während des Aufwickelvorganges des Sicherheitsgurtes in die Parkposition kann verhindert werden. Ferner kann die Kupplung 8 alternativ zu der drehzahlgesteuerten Öffnung auch dann öffnen, wenn das zu überwindende Drehmoment bei gleicher oder abnehmender Drehzahl plötzlich ansteigt. Eine solche Situation kann z.B. dann gegeben sein, wenn der Sicherheitsgurt mit hoher Geschwindigkeit in die Parkposition aufgerollt wird. Wenn der Sicherheitsgurt dann fast vollständig aufgewickelt ist, steigt das zu überwindende Drehmoment an, und die Kupplung 8 schaltet selbsttätig. Durch das Schalten der Kupplung 8 wird die Drehzahl des Abtriebszahnrades 23 verringert und das von dem Abtriebszahnrad 23 ausgeübte Drehmoment vergrößert, so dass der Sicherheitsgurt nachfolgend mit einer geringeren Rückzugsgeschwindigkeit und einer erhöhten Rückzugskraft aufgewickelt wird.

Das Getriebe 6 weist durch das Planetengetriebe einen einzigen Kraftübertragungsweg, hier ein zweistufiges Planetengetriebe auf. Durch die vorgeschlagene Lösung der Übertragung der Antriebsdrehbewegung über das als Baugruppe drehende Getriebe 6 wird ohne einen zusätzlichen Bauraumbedarf ein erster Kraftübertragungsweg zur Verwirklichung einer ersten Funktion, hier das Aufwickeln des Sicherheitsgurtes in die Parkposition, geschaffen. Außerdem erfolgt die Schaltung der Kupplung 8 auf sehr einfache Weise durch die Erhöhung der Drehzahl, so dass der zweite Kraftübertragungsweg selbsttätig eröffnet wird, wenn die Drehzahl des Elektromotor 5 zur Straffung des Sicherheitsgurtes also zu seiner zweiten Funktion erhöht wird. Die Schaltung der Kupplung 8 wird damit direkt durch den Funktionswechsel des Elektromotors 5 selbst gesteuert.

Ferner sind der Elektromotor 5 und das Getriebe 6 zylinderförmig ausgebildet sowie koaxial zueinander und koaxial zu der Drehachse der Gurtwelle 4 ausgerichtet. Außerdem weisen sowohl der Elektromotor 5 als auch das Getriebe 6 einen Durchmesser im Querschnitt zu ihrer Drehachse auf, welcher kleiner als der Außendurchmesser des Gurtwickels bei maximal aufgewickeltem Gurtband ist. Damit ergibt sich ein sehr schlanker, länglicher Aufbau des Gurtaufrollers, dessen maximale Außenabmaße durch den maximalen Außendurchmesser des Gurtwickels vorgegeben sind. Da der maximale Außendurchmesser des Gurtwickels aufgrund der Dicke und der Länge des aufzuwickelnden Gurtbandes zwingend vorgegeben ist und nicht verringert werden kann, kann der Gurtaufroller damit mit geringstmöglichen Abmaßen senkrecht zu der Drehachse der Gurtwelle 4 ausgebildet werden.

Die Kupplung 8 wird hier als Baugruppe des Getriebes 6 verstanden, so dass das erste Teil 13 und das zweite Teil 14 selbstverständlich Teile der Kupplung 8 aber damit auch Teile der übergeordneten Baugruppe des Getriebes 6 sind. Die Kupplung 8 ist dafür bevorzugt an der dem Elektromotor 5 zugewandten Eingangsseite des Getriebes 6 angeordnet.

Der Elektromotor 5 ist bevorzugt spannungsgesteuert und bewirkt durch das Anlegen unterschiedlicher Spannungen unterschiedliche auf die Gurtwelle 4 einwirkende Drehmomente bzw. unterschiedliche auf den Sicherheitsgurt ausgeübte Rückzugskräfte. In dem normalen Tragezustand des Sicherheitsgurtes wird dabei eine Spannung von 2 bis 3 V angelegt, durch welche die Rückzugskraft auf ein möglichst niedriges Niveau reduziert ist, welche aber dennoch ausreicht, den Sicherheitsgurt nach einem Bewegen des Insassen funktionssicher an den Insassen heranzuziehen. Zum Aufwickeln des Sicherheitsgurtes in die Parkposition nach dem Abschnallen wird die Spannung auf 9 V erhöht, so dass der Sicherheitsgurt mit einer erhöhten Rückzugskraft in die Parkposition aufgewickelt wird. Ferner wird die Spannung auch während eines reversiblen Straffvorganges auf 12 V erhöht, welche für eine eventuell zusätzlich vorzusehende Funktion eines reversiblen Gurtstraffens mit einer erhöhten Rückzugskraft auf ca. 36 V erhöht werden kann.

## Patentansprüche

1. Gurtaufroller (1) mit
- einer in einem fahrzeugfest befestigbaren Gehäuse drehbar gelagerten Gurtwelle (4), auf welcher ein Sicherheitsgurt aufwickelbar ist, und
- einem Elektromotor (5) zum Antrieb der Gurtwelle (4) zu einer Drehbewegung, und
- einem die Drehbewegung von dem Elektromotor (5) auf die Gurtwelle (4) übertragenden Getriebe (6), wobei
- das Getriebe (6) in einem ersten Kraftübertragungsweg als Baugruppe zum Antrieb der Gurtwelle (4) mit einem ersten Drehmoment antreibbar ist, und
- das Getriebe (6) durch Schalten einer drehzahl- und/oder drehmomentgesteuerten Kupplung (8) unter Eröffnung eines zweiten Kraftübertragungsweges zum Antrieb der Gurtwelle (4) mit einem zweiten Drehmoment antreibbar ist, wobei
- die Kupplung (8) wenigstens ein durch eine Feder (12) in einen Eingriff in ein erstes Teil (13) des Getriebes (6) federbelastetes Kupplungselement (15) aufweist, wobei
- ein drehfest mit dem Elektromotor (5) verbundenes Antriebsrad (17) mit einem polygonförmigen Kraftübertragungsprofil (19) vorgesehen ist, und
- das Kupplungselement (15) wenigstens einen an dem polygonförmigen Kraftübertragungsprofil (19) anliegenden Kraftübertragungsabschnitt (20,21) aufweist, durch welchen das Kupplungselement (15) bei einem Überschreiten einer von dem Antriebsrad (17) übertragenen vorbestimmten Drehzahl und/oder eines vorbestimmten Drehmomentes und/oder einer vorbestimmten Drehbeschleunigung aufgrund einer Relativbewegung des Antriebsrades (17) zu dem Kupplungselement (15) entgegen der Kraft der Feder (12) aus dem Eingriff in das erste Teil (13) des Getriebes (6) heraus bewegbar ist, und
- das Kupplungselement (15) an einem zweiten Teil (14) des Getriebes (6) gelagert ist, und
- das zweite Teil (14) ein drehfest verbundenes Zahnrad (31) aufweist, mit welchem es sich in einem Verzahnungseingriff mit einem oder mehr Zahnrädern eines Übersetzungsgetriebes (9) befindet, **dadurch gekennzeichnet, dass**
- die Feder (12) durch eine Bogenfeder gebildet ist, welche mit einem ersten Ende (25) mit dem Kupplungselement (15) und mit einem zweiten Ende (23) mit dem zweiten Teil (14) verbunden ist.

2. Gurtaufroller (1) nach Anspruch 1, **dadurch gekennzeichnet, dass**
- das Kupplungselement (15) die Drehbewegung des Antriebsrades (17) unterhalb der vorbestimmten Drehzahl und/oder unterhalb des vorbestimmten Drehmomentes auf das erste Teil (13) des Getriebes (6) überträgt.

3. Gurtaufroller (1) nach einem der Ansprüche 1 oder 2,
**dadurch gekennzeichnet, dass**
- das Kupplungselement (15) einen in das erste Teil (13) des Getriebes (6) eingreifenden Eingriffsabschnitt (22) aufweist, und
- das Kupplungselement (15) wenigstens zwei zu einer durch den Eingriffsabschnitt (22) verlaufenden Symmetrieachse (S) symmetrisch ausgebildete Kraftübertragungsabschnitte (20,21) aufweist, mit welchen das Kupplungselement (15) an dem polygonförmigen Kraftübertragungsprofil (19) des Antriebsrades (17) anliegt.

4. Gurtaufroller (1) nach einem der vorangegangenen Ansprüche, **dadurch gekennzeichnet, dass**
- das polygonförmige Kraftübertragungsprofil (19) im Querschnitt ein Dreieckprofil aufweist, und
- das Kupplungselement (15) das Dreieckprofil an zwei Ecken (27,28,29) umfasst.

5. Gurtaufroller (1) nach Anspruch 4, **dadurch gekennzeichnet, dass**
- das Dreieckprofil die Geometrie eines gleichseitigen Dreiecks aufweist.

6. Gurtaufroller (1) nach einem der Ansprüche 1 bis 5,
**dadurch gekennzeichnet, dass**
- das zweite Teil (14) eine Anschlagfläche (26) aufweist, an welcher das Antriebsrad (17) mit dem Kraftübertragungsprofil (19) durch die Ausführung der Relativbewegung kraftübertragend zur Anlage gelangt.

7. Gurtaufroller (1) nach einem der Ansprüche 1 bis 6,
**dadurch gekennzeichnet, dass**
- das zweite Teil (14) eine Führung (32) aufweist, in welcher das Kupplungselement (15) mit dem Eingriffsabschnitt (22) geführt ist.

## Claims

1. Belt retractor (1) comprising
- a belt shaft (4) which is rotatably mounted in a housing and onto which a seat belt can be wound, the housing being able to be fastened to the vehicle, and
- an electric motor (5) for driving the belt shaft (4) to move rotationally, and
- a gear mechanism (6) which transmits the rotational movement from the electric motor (5) to the belt shaft (4),
- the gear mechanism (6) being able to be driven in a first force-transmission path as an assembly to drive the belt shaft (4) with a first torque, and
- the gear mechanism (6) being able to be driven to drive the belt shaft (4) with a second torque, by shifting a speed-controlled and/or torque-controlled coupling (8), whereby a second force-transmission path is opened,
- the coupling (8) having at least one coupling element (15) which is springloaded by a spring (12) into engagement in a first part (13) of the gear mechanism (6),
- a drive wheel (17) which is connected to the electric motor (5) for conjoint rotation and has a polygonal force-transmission profile (19) being provided, and
- the coupling element (15) having at least one force-transmission portion (20,21) which abuts the polygonal force-transmission profile (19) and by which the coupling element (15) can be moved, against the force of the spring (12), out of engagement in the first part (13) of the gear mechanism (6) due to a relative movement of the drive wheel (17) relative to the coupling element (15) when a predetermined rotational speed transmitted by the drive wheel (17) and/or a predetermined torque and/or a predetermined rotational acceleration is exceeded, and
- the coupling element (15) being mounted on a second part (14) of the gear mechanism (6), and
- the second part (14) having a gear wheel (31) connected for conjoint rotation, with which it is in toothed engagement with one or more gear wheels of a transmission gear mechanism (9), **characterized in that**
- the spring (12) is formed by a bow spring which is connected with a first end (25) to the coupling element (15) and with a second end (23) to the second part (14).

2. Belt retractor (1) according to claim 1, **characterized in that**
- the coupling element (15) transmits to the first part (13) of the gear mechanism (6) the rotational movement of the drive wheel (17) below the predetermined rotational speed and/or below the predetermined torque.

3. Belt retractor (1) according to any of claims 1 or 2, **characterized in that**
- the coupling element (15) has an engagement portion (22) engaging in the first part (13) of the gear mechanism (6), and
- the coupling element (15) has at least two force-transmission portions (20,21) which are symmetrical to an axis of symmetry (S) extending through the engagement portion (22) and with which the coupling element (15) abuts the polygonal force-transmission profile (19) of the drive wheel (17).

4. Belt retractor (1) according to any of the preceding claims,
**characterized in that**
- the cross-section of the polygonal force-transmission profile (19) has a triangular profile, and
- the coupling element (15) encompasses the triangular profile at two corners (27,28,29).

5. Belt retractor (1) according to claim 4, **characterized in that**
- the triangular profile has the geometry of an equilateral triangle.

6. Belt retractor (1) according to any of claims 1 to 5, **characterized in that**
- the second part (14) has a stop surface (26) which the drive wheel (17) with the force-transmission profile (19) comes to abut in a force-transmitting manner by the execution of the relative movement.

7. Belt retractor (1) according to any of claims 1 to 6, **characterized in that**
- the second part (14) has a guide (32) in which the coupling element (15) is guided with the engagement portion (22).

## Revendications

1. Enrouleur de ceinture (1) comportant
- un arbre de ceinture (4) monté de manière à pouvoir tourner dans un boîtier pouvant être fixé de manière solidaire au véhicule, sur lequel arbre de ceinture une ceinture de sécurité peut être enroulée, et
- un moteur électrique (5) destiné à entraîner l'arbre de ceinture (4) dans un mouvement de rotation, et
- un engrenage (6) transmettant le mouvement de rotation du moteur électrique (5) à l'arbre de ceinture (4), dans lequel
- dans un premier trajet de transmission de force, l'engrenage (6) peut être entraîné avec un premier couple en tant que module pour l'entraînement de l'arbre de ceinture (4), et
- l'engrenage (6) peut être entraîné avec un second couple par commutation d'un embrayage (8) commandé par la vitesse de rotation et/ou par le couple en ouvrant un second trajet de transmission de force pour l'entraînement de l'arbre de ceinture (4), dans lequel
- l'embrayage (8) présente au moins un élément d'embrayage (15) sollicité par un ressort (12) en prise avec une première partie (13) de l'engrenage (6), dans lequel
- il est prévu une roue d'entraînement (17) solidaire en rotation du moteur électrique (5) et comportant un profilé de transmission de force (19) polygonal, et
- l'élément d'embrayage (15) présente au moins une section de transmission de force (20, 21) adjacente au profilé de transmission de force (19) polygonal, par laquelle section de transmission de force l'élément d'embrayage (15) peut être dégagé de la prise avec la première partie (13) de l'engrenage (6) en cas de dépassement d'une vitesse de rotation prédéterminée transmise par la roue d'entraînement (17) et/ou d'un couple prédéterminé et/ou d'une accélération de rotation prédéterminée en raison d'un mouvement relatif de la roue d'entraînement (17) par rapport à l'élément d'embrayage (15) à l'encontre de la force du ressort (12), et
- l'élément d'embrayage (15) est monté sur une seconde partie (14) de l'engrenage (6), et
- la seconde partie (14) présente une roue dentée (31), reliée de manière solidaire en rotation, avec laquelle elle se trouve en prise d'engrènement avec une ou plusieurs roues dentées d'un engrenage de transmission (9), **caractérisé en ce que**
- le ressort (12) est formé par un ressort en arc qui est relié par une première extrémité (25) à l'élément d'embrayage (15) et par une seconde extrémité (23) à la seconde partie (14).

2. Enrouleur de ceinture (1) selon la revendication 1,
**caractérisé en ce que**
- l'élément d'embrayage (15) transmet le mouvement de rotation de la roue d'entraînement (17) à la première partie (13) de l'engrenage (6) en dessous de la vitesse de rotation prédéterminée et/ou en dessous du couple prédéterminé.

3. Enrouleur de ceinture (1) selon l'une des revendications 1 ou 2,
**caractérisé en ce que**
- l'élément d'embrayage (15) présente une section de prise (22) venant en prise avec la première partie (13) de l'engrenage (6), et
- l'élément d'embrayage (15) présente au moins deux sections de transmission de force (20, 21) réalisées symétriquement par rapport à un axe de symétrie (S) s'étendant à travers la section de prise (22), par lesquelles sections de transmission de force l'élément d'embrayage (15) s'appuie contre le profilé de transmission de force (19) polygonal de la roue d'entraînement (17).

4. Enrouleur de ceinture (1) selon l'une des revendications précédentes,
**caractérisé en ce que**
- le profilé de transmission de force (19) polygonal présente, en section transversale, un profilé triangulaire, et
- l'élément d'embrayage (15) comprend le profilé triangulaire au niveau de deux coins (27, 28, 29).

5. Enrouleur de ceinture (1) selon la revendication 4,
**caractérisé en ce que**
- le profilé triangulaire présente la géométrie d'un triangle équilatéral.

6. Enrouleur de ceinture (1) selon l'une des revendications 1 à 5,
**caractérisé en ce que**
- la seconde partie (14) présente une surface de butée (26) sur laquelle la roue d'entraînement (17) comportant le profilé de transmission de force (19) vient en appui en transmettant de la force, par la réalisation du mouvement relatif.

7. Enrouleur de ceinture (1) selon l'une des revendications 1 à 6,
**caractérisé en ce que**
- la seconde partie (14) présente un guide (32) dans lequel l'élément d'embrayage (15) est guidé avec la section de prise (22).
